# EUROPÄISCHE PATENTSCHRIFT

(11) **EP 1 673 643 B1**
(45) Veröffentlichungstag und Bekanntmachung des Hinweises auf die Patenterteilung: **25.09.2013**
(21) Anmeldenummer: 04762470.5
(22) Anmeldetag: 22.07.2004
(51) Int. Cl.: G01V 3/15

(54) **VORRICHTUNG ZUR UMFELDERKENNUNG**
ENVIRONMENT RECOGNITION DEVICE
DISPOSITIF SENSORIEL DE DÉTECTION DE L'ENVIRONNEMENT

(30) Priorität: 11.09.2003 DE 10342045
(43) Veröffentlichungstag der Anmeldung: 28.06.2006
(73) Patentinhaber: ROBERT BOSCH GMBH, 70442 Stuttgart (DE)
(72) Erfinder: KOLATSCHEK, Josef, 71263 Weil Der Stadt (DE)
(86) Internationale Anmeldenummer: PCT/DE2004/001620
(87) Internationale Veröffentlichungsnummer: WO 2005/026777

(56) Entgegenhaltungen:
- WO-A-01/15109
- WO-A-03/056353
- DE-A- 2 823 096
- DE-A- 10 045 697
- GB-A- 2 232 518
- US-A- 4 232 286

## Beschreibung

### Stand der Technik

Die Erfindung geht aus von einer Vorrichtung zur Umfelderkennung mit einem ersten magnetischen Wechselfeld nach der Gattung des unabhängigen Patentanspruchs.

Aus WO 01/15109 A1 ist ein magnetischer Sensor bekannt, bei dem ein erzeugtes primäres Magnetfeld durch ein Objekt verändert und diese Veränderung gemessen wird. Die Stärke der Veränderungen hängt von den magnetischen Eigenschaften des Objek-ts ab, also ob es sich um paramagnetische, diamagnetische oder ferromagnetische Eigenschaften handelt. Charakterisiert werden diese Eigenschaften durch die magnetische . Suszeptibilität und Permeabilität. Dies hat seine Ursache im magnetischen Verhalten und im inneren Aufbau der Elektronenhülle der vorhandenen Atome und Moleküle. Der Gegenstand dieser Anmeldung ist also eine Messvorichtung, bei der das primäre Magnetfeld beeinflusst wird.

Nachteilig daran ist, dass die Messung der Abschwächung des primären veränderlichen Magnetfelds empfindlich gegenüber Störeinflüssen ist und keine Möglichkeit zur Messung des Abstands zum Objekt vorliegt.

Aus WO-A-03056353 ist es bekannt, Metallteile mittels einer Wirbelstrommessung zu erkennen. Dabei werden zumindest zwei Spulen verwendet. Weiterhin ist noch ein Navigationsgerät vorgesehen, um die Bewegung des Geräts zu regeln.

### Vorteile der Erfindung

Die erfindungsgemäße Vorrichtung zur Umfelderkennung mit einem ersten magnetischen Wechselfeld hat demgegenüber den Vorteil, dass nunmehr eine Messung des Abstands vom Fahrzeug zum Objekt möglich ist, eine genaue Aussage über die Art und Beschaffenheit des Objekts gemacht werden kann, eine kostengünstige Technologie verwendet wird, nämlich die der Wirbelstrommessung, und eine hohe Unempfindlichkeit gegenüber einer Oberflächenbeschaffenheit oder einem Aspektwinkel des Objekts vorliegt: Deshalb kann zwischen Fußgängern und anderen Hindernisse unterschieden werden. Dafür wird eine ausschließliche Messung eines zweiten magnetischen Wechselfeldes verwendet, das durch induzierte Wirbelströme des ersten magnetischen Wechselfeldes erzeugt wird. Dieses zweite magnetische Wechselfeld hängt von elektrischen Eigenschaften des Objekts und nicht von der magnetischen Suszeptibilität und Permeabilität ab. Die dafür ausschlaggebende Größe ist die Leitfähigkeit des Objekts.

Durch die in den abhängigen Ansprüchen aufgeführten Maßnahmen und Weiterbildungen sind vorteilhafte Verbesserungen der im unabhängigen Patentanspruch angegebenen Vorrichtung zur Umfelderkennung möglich.

Besonders vorteilhaft ist, dass die Vorrichtung wenigstens eine Empfangsvorrichtung aufweist, um das zweite magnetische Wechselfeld, also das, das durch den Wirbelstromeffekt gebildet wurde, zu empfangen. Diese wenigstens eine Empfangsvorrichtung ist von dem ersten magnetischen Wechselfeld isoliert. Die Isolierung kann durch eine entsprechende Beabstandung erfolgen, dass also das erste magnetische Wechselfeld nicht mehr messbar am Ort der Empfangsvorrichtung ist oder durch entsprechende Filter, die entweder elektrisch implementiert werden oder magnetisch sind, also beispielsweise durch eine magnetische Wand.

Zur Abstandsmessung wird eine Phasenverschiebung zwischen dem ersten und zweiten magnetischen Wechselfeld ausgewertet. Die Amplitude des zweiten magnetischen Wechselfelds wird zur Charakterisierung der Leitfähigkeit des wenigstens einen Objekts verwendet, da das zweite magnetische Wechselfeld, wie oben dargelegt, in Abhängigkeit von der Leitfähigkeit des Objekts erzeugt wird. Der Einfluss der Leitfähigkeit drückt sich insbesondere in der Amplitude aus. Durch die separate Messung des Abstands vom Objekt kann der Effekt der Dämpfung bei der Amplitude berücksichtigt werden, um daraus dann die Leitfähigkeit zu bestimmen. Die Leitfähigkeit wird zur Klassifizierung des Objekts verwendet, wobei abgespeicherte Leitfähigkeiten für typische Objekte wie Fußgänger, andere Fahrzeuge oder eine Hauswand oder ein Baum zum Vergleich verwendet werden. Durch die Auswertung der zeitlichen Änderung der Entfernung ist es möglich, eine Relativgeschwindigkeit zwischen dem Fahrzeug und dem Objekt zu bestimmen. Insbesondere diese Information wie auch die Klassifikation des Objekts können einem Rückhaltesystem zugeführt werden, um in Abhängigkeit von diesen Analysen Precrash-Maßnahmen oder andere crashvorbereitende Maßnahmen zu treffen. Dies kann auch zur Beeinflussung eines Auslösealgorithmus verwendet werden. Zu den Precrash-Maßnalunen gehören beispielsweise die Aktivierung von reversiblen Rückhaltemitteln wie Gurtstraffern.

Die Vorrichtung kann an bestimmten Stellen des Fahrzeugs eingesetzt werden, beispielsweise nur an der Fahrzeugfront oder den Fahrzeugseiten oder im Fahrzeugheck. Sie kann jedoch auch an allen oder mehreren von diesen Orten lokalisiert sein. Insbesondere kann die Vorrichtung auch in Kombination mit anderen Umfeldsensoren eingesetzt werden, um Plausibilisierungsdaten zu erzeugen.

### Zeichnung

Ausführungsbeispiele der Erfindung sind in der Zeichnung dargestellt und werden in der nachfolgenden Beschreibung näher erläutert.

Es zeigen Figur 1 ein Blockschaltbild der erfindungsgemäßen Vorrichtung, Figur 2 Einbauorte der erfindungsgemäßen Vorrichtung im Fahrzeug und Figur 3 ein Flussdiagramm zur Auswertung der Daten, die die erfindungsgemäße Vorrichtung empfängt.

### Beschreibung

Maßgeblich zur Schutzwirkung von Insassenschutzvorrichtungen in Kraftfahrzeugen ist die zeitgenaue Ansteuerung von Insassenrückhaltemitteln. Die Ansteuerung geschieht üblicherweise durch Auswertung von Beschleunigungssensorsignalen, die bei einem Aufprall auf ein Hindernis im Fahrzeug selbst bestimmt werden. Indirekt wird durch die Auswertung dieser Sensorsignale auch auf die Art des Hindernisses geschlossen. Diese Information findet dann Eingang in die Art und Weise, wie die Schutzvorrichtung angesteuert wird. Das Hindernis kann hierbei ein anderes Fahrzeug oder eine Barriere mit fester oder nachgiebiger Struktur sein oder aber auch ein Fußgänger. Im letzteren Fall werden auch Schutzvorrichtungen aktiviert, die die Verletzungsschwere des Fußgängers herabsetzen können. Liegen bereits Daten in der Precrash-Phase über das Objekt, mit dem eine Kollision zu erwarten ist, vor wie Informationen über Abstand, Relativgeschwindigkeit und Beschaffenheit, können die vorhandenen Schutzmittel entsprechend mit besserer zeitlicher Abstimmung und mit besserer Anpassung an die Art des Hindernisses ausgelöst werden. Damit kann eine bessere Schutzwirkung für die Insassen und gegebenenfalls den Fußgänger erzielt werden. Üblicherweise werden zur Precrash-Hinderniserkennung Entfernungs- und Geschwindigkeitssensoren, basierend auf aktiver Mikrowellenstrahlung, also Radar, verwendet. Diese sind meistens an der Fahrzeugfront eines Fahrzeugs angeordnet.

Erfindungsgemäß wird nun vorgeschlagen, mittels einer Wirbelstrommessung eine günstigere und bessere Vorrichtung zur Umfelderkennung einzusetzen. Dafür wird durch einen Sender im Fahrzeug ein erstes magnetisches Wechselfeld erzeugt, das in möglichen Objekten im Umfeld des Fahrzeugs ein zweites magnetisches Wechselfeld über Wirbelströme erzeugt. Dieses zweite magnetische Wechselfeld hängt lediglich von den elektrischen Eigenschaften des Objekts, wie der Leitfähigkeit, ab. Die Empfangsvorrichtung, wobei auch mehrere Empfangsvorrichtungen am Fahrzeug vorgesehen sein können, für dieses zweite magnetische Wechselfeld sieht das erste magnetische Wechselfeld nicht oder der Einfluss des ersten magnetischen Wechselfelds wird elektrisch bzw. elektronisch eliminiert. Durch einen Vergleich der Phasen des ersten und zweiten magnetischen Wechselfelds in einer Auswerteeinheit, beispielsweise in einem der Vorrichtung zugeordneten Prozessor, ist eine Bestimmung des Abstands zwischen Objekt und Fahrzeug möglich. Durch eine Auswertung der Amplitude des zweiten magnetischen Wechselfelds ist ein Rückschluss auf die Leitfähigkeit des Objekts und damit eine Klassifizierung des Objekts möglich. Dies kann insbesondere durch Vergleiche mit gespeicherten Daten erleichtert werden.

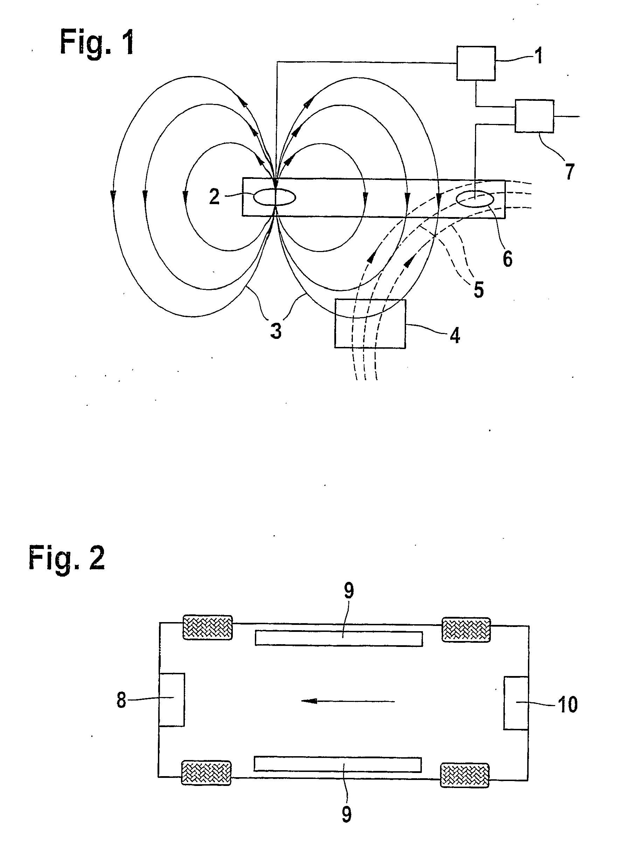

Figur 1 zeigt in einem Blockschaltbild die erfindungsgemäße Vorrichtung. Die erfindungsgemäße Vorrichtung weist eine Steuereinheit 1 und eine Sendespule 2 als Sender auf, wobei die Sendespule 2 ein hochfrequentes, primäres magnetisches Wechselfeld erzeugt. Das erste magnetische Wechselfeld 3 induziert Wirbelströme in einem sich in der Nähe befindenden Objekt 4. Durch diese Wirbelströme wird wiederum ein zweites magnetisches Wechselfeld 5 erzeugt, das mit einer Empfängerspule 6, die in einem entsprechenden Abstand zur Sendespule 2 angeordnet ist, sensiert werden kann. Die Empfängerspule 6 ist zur Sendespule 2 derart beabstandet, dass das erste magnetische Wechselfeld 3 von der Empfängerspule 6 nicht empfangen werden kann. Zusätzlich oder anstatt ist es möglich, durch Filter, die entweder elektrisch, elektronisch oder magnetisch sind, den Einfluss des ersten magnetischen Wechselfelds auf die Empfängerspule 6 bzw. die nachfolgende Auswertung zu eliminieren. Die Empfängerspule 6 ist mit einer Auswerteeinheit 7 verbunden, die ebenfalls mit der Steuereinheit 1 verbunden ist. Die Auswerteeinheit 7 kann die Amplitude des zweiten magnetischen Wechselfelds sowie die Phasenverschiebung des zweiten gegenüber dem ersten magnetischen Wechselfeld auswerten. Aus der Bestimmung der Phasenverschiebung ist es möglich, Aussagen über die Entfernung des Fahrzeugs zum Objekt zu machen. Die Amplitude des zweiten magnetischen Wechselfelds ermöglicht es, unter Berücksichtigung der zuvor bestimmten Entfernung zum Objekt 4 Aussagen über die Natur des Objekts zu machen, da der induzierte Wirbelstrom und damit auch die gemessene Amplitude des zweiten magnetischen Wechselfelds direkt proportional zur Entfernung und der Leitfähigkeit des Objekts sind.

Durch Auswertung der Änderung der Entfernungsinformation über einen vorherbestimmten Zeitraum hinweg lassen sich zusätzliche Aussagen über die Relativgeschwindigkeit des Objekts 4 machen. Durch einen Vergleich der durch Messung bestimmten Leitfähigkeit des Objekts 4 mit einem Katalog von Objekten zugeordneten Leitfähigkeiten lassen sich die Aussagen über die Natur des Objekts noch präzisieren, z.B. ob es sich um ein Fahrzeug, eine Holzwand oder um einen Fußgänger handelt.

Der Einfachheit halber wurden in Figur 1 die elektrischen und elektronischen Komponenten, die notwendig sind, um das primäre magnetische Wechselfeld zu erzeugen und das sekundäre magnetische Wechselfeld derart aufzubereiten, dass die Auswerteeinheit 7 es auswerten kann, hier weggelassen. Notwendig hierfür sind zur Erzeugung ein Oszillator und gegebenenfalls eine Frequenzumsetzung und bei der Empfängerspule Filter, eine Digitalisierung mit Zählern und Verstärker.

Figur 2 zeigt, an welchen Orten beispielhaft die erfindungsgemäße Vorrichtung am Fahrzeug angeordnet werden kann. Dazu kann die Fahrzeugfront 8, beispielsweise die Stoßstange, verwendet werden oder die Fahrzeugseiten 9 oder der Heckbereich 10. Nimmt man alle diese Orte 8, 9 und 10, ist es möglich, Objekte im gesamten Umfeld des Fahrzeugs zu erkennen.

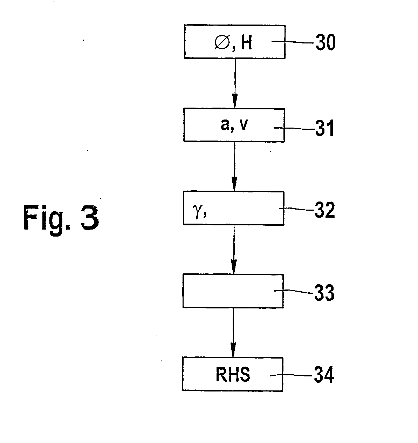

In Figur 3 ist in einem Flussdiagramm dargestellt, wie die Daten, die mittels des zweiten magnetischen Wechselfelds ermittelt werden, ausgewertet werden. Diese Auswertung kann in der Auswerteeinheit 7 erfolgen, die beispielsweise der Vorrichtung direkt zugeordnet ist oder in einem Steuergerät im Fahrzeug, beispielsweise im Steuergerät für Rückhaltesysteme. In Verfahrensschritt 30 wird zum einen durch einen Vergleich der Phasen des ersten und zweiten magnetischen Wechselfelds die Phasendifferenz bestimmt, aus der dann der Abstand bestimmt werden kann. Es wird jedoch auch die Amplitude des empfangenen zweiten magnetischen Wechselfelds in Verfahrensschritt 30 ermittelt. In Verfahrensschritt 31 wird dann aus der Phase der Abstand bestimmt und über einen größeren Zeitraum hinweg durch die Veränderung des Abstands die Relativgeschwindigkeit zwischen dem Objekts 4 und dem Fahrzeug. In Verfahrensschritt 32 wird unter Berücksichtigung des Abstands zwischen dem Objekt 4 und dem Fahrzeug aus der Amplitude h die Leitfähigkeit γ bestimmt und mittels der Leitfähigkeit durch einen Vergleich der abgespeicherten Leitfähigkeiten für typische Objekte eine Klassifizierung des Objekts vorgenommen. In Verfahrensschritt 33 wird dann das Objekt bestimmt, aus dem dann in Verfahrensschritt 34 gegebenenfalls entsprechende Rückhaltemittel und das gesamte Rückhaltesystem beeinflusst werden. Die Beeinflussung kann bereits im Algorithmus einsetzen, um diesen beispielsweise schärfer zu schalten, also eine Auslöseschwelle zu senken, und um entsprechende Rückhaltemittel auch zum Schutz eines Fußgängers gezielt auszulösen. Werden mehrere Empfangsvorrichtungen verwendet, ist auch eine genaue Bestimmung des Ortes des Objekts 4 möglich.

## Patentansprüche

1. Vorrichtung mit Mitteln zur Umfelderkennung mit einem ersten magnetischen Wechselfeld (3) für ein Fahrzeug, wobei wenigstens ein Objekt (4) im Umfeld des Fahrzeugs durch ein zweites magnetisches Wechselfeld (5) erkannt wird, wobei das zweite magnetische Wechselfeld in dem wenigstens einen Objekt (4) durch das erste magnetische Wechselfeld (3) hervorgerufen wird, **dadurch gekennzeichnet, dass** die Mittel so eingerichtet sind, dass anhand des zweiten magnetischen Wechselfelds unter Berücksichtigung des Abstands zwischen dem Objekt (4) und dem Fahrzeug aus einer Amplitude (h) eine Leitfähigkeit (γ) des Objekts (4) und mittels der Leitfähigkeit (γ) durch einen Vergleich mit abgespeicherten Leitfähigkeiten für typische Objekte eine Klassifizierung des Objekts vorgenommen wird, dass dann das Objekt bestimmt wird, aus dem dann entsprechende Rückhaltemittel und das gesamte Rückhaltesystem beeinflusst werden.

2. Vorrichtung nach Anspruch 1, **dadurch gekennzeichnet, dass** die Vorrichtung wenigstens eine Empfangsvorrichtung (6) für das zweite magnetische Wechselfeld (5) aufweist, die von dem ersten magnetischen Wechselfeld (3) isoliert ist.

3. Vorrichtung nach Anspruch 1, **dadurch gekennzeichnet, dass** die Vorrichtung derart konfiguriert ist, dass die Vorrichtung anhand einer Phasenverschiebung zwischen dem ersten und zweiten magnetischen Wechselfeld (3, 5) eine Entfernung zwischen dem Fahrzeug und dem wenigstens einen Objekt (4) bestimmt.

4. Vorrichtung nach Anspruch 3, **dadurch gekennzeichnet, dass** die Vorrichtung derart konfiguriert ist, dass die Vorrichtung in Abhängigkeit von einer zeitlichen Änderung der Entfernung eine Relativgeschwlndigkelt zwischen dem Fahrzeug und dem wenigstens einen Objekt (4) bestimmt.

5. Vorrichtung nach einem der vorhergehenden Ansprüche 1, bis 4, **dadurch gekennzeichnet, dass** die Vorrichtung derart konfiguriert ist, dass die Vorrichtung in Abhängigkeit von einer Amplitude des zweiten magnetischen Wechselfelds (5) das wenigstens eine Objekt (4) klassifiziert.

6. Vorrichtung nach Anspruch 5, **dadurch gekennzeichnet, dass** die Vorrichtung derart konfiguriert ist, dass die Vorrichtung in Abhängigkeit von der Amplitude eine Leitfähigkeit des wenigstens einen Objekts (4) bestimmt und anhand der Leitfähigkeit das Objekt (4) klassifiziert,

7. Vorrichtung nach Anspruch 2, **dadurch gekennzeichnet, dass** die wenigstens eine Empfangsvorrichtung (6) durch eine Beabstandung von dem wenigstens einen Sender (2) für das erste magnetische Wechselfeld isoliert ist.

8. Vorrichtung nach Anspruch 2, **dadurch gekennzeichnet, dass** wenigstens ein Filter zur Isolierung der wenigstens einen Empfangsvorrichtung (6) von dem wenigstens einen Sender (2) vorgesehen ist.

9. Vorrichtung nach Anspruch 8, **dadurch gekennzeichnet, dass** der wenigstens eine Filter ein elektronischer Filter ist.

10. Vorrichtung nach Anspruch 8, **dadurch gekennzeichnet, dass** der wenigstens eine Filter ein magnetischer Filter ist.

## Claims

1. Apparatus with means for detecting surroundings, having a first alternating magnetic field (3) for a vehicle, at least one object (4) being detected in the surroundings of the vehicle by a second alternating magnetic field (5), the second alternating magnetic field being induced in the at least one object (4) by the first alternating magnetic field (3), **characterized in that** the means are set up such that, with the aid of the second alternating magnetic field and taking account of the distance between the object (4) and the vehicle, a conductivity (γ) of the object (4) is determined from an amplitude (h), and the conductivity (γ) is used to undertake a classification of the object by a comparison with stored conductivities for typical objects, and **in that** the object is then determined by which appropriate restraint means and the entire restraint system are then influenced.

2. Apparatus according to Claim 1, **characterized in that** the apparatus has at least one receiving device (6) for the second alternating magnetic field (5) which is isolated from the first alternating magnetic field (3).

3. Apparatus according to Claim 1, **characterized in that** the apparatus is configured in such a way that the apparatus determines a distance between the vehicle and the at least one object (4) with the aid of a phase shift between the first and second alternating magnetic fields (3, 5).

4. Apparatus according to Claim 3, **characterized in that** the apparatus is configured in such a way that the apparatus determines a relative speed between the vehicle and the at least one object (4) as a function of a temporal change in the distance.

5. Apparatus according to one of the preceding Claims 1 to 4, **characterized in that** the apparatus is configured in such a way that the apparatus classifies the at least one object (4) as a function of an amplitude of the second alternating magnetic field (5).

6. Apparatus according to Claim 5, **characterized in that** the apparatus is configured in such a way that the apparatus determines a conductivity of the at least one object (4) as a function of the amplitude, and classifies the object (4) with the aid of the conductivity.

7. Apparatus according to Claim 2, **characterized in that** the at least one receiving device (6) is isolated by being spaced apart from the at least one transmitter (2) for the first alternating magnetic field.

8. Apparatus according to Claim 2, **characterized in that** at least one filter is provided for isolating the at least one receiving device (6) from the at least one transmitter (2).

9. Apparatus according to Claim 8, **characterized in that** the at least one filter is an electronic filter.

10. Apparatus according to Claim 8, **characterized in that** the at least one filter is a magnetic filter.

## Revendications

1. Dispositif comprenant des moyens de détection de l'environnement avec un premier champ magnétique alternant (3) pour un véhicule, au moins un objet (4) dans l'environnement du véhicule étant détecté par un deuxième champ magnétique alternant (5), le deuxième champ magnétique alternant étant produit dans l'au moins un objet (4) par le premier champ magnétique alternant (3), **caractérisé en ce que** les moyens sont conçus de telle sorte que, à l'aide du deuxième champ magnétique alternant et en tenant compte de la distance entre l'objet (4) et le véhicule, une conductivité (γ) de l'objet (4) est déterminée à partir d'une amplitude (h), et au moyen de la conductivité (γ) une classification de l'objet est effectuée par une comparaison avec des conductivités mises en mémoire pour des objets types, et **en ce que** l'objet est ensuite déterminé, et des moyens de retenue correspondants et l'ensemble du système de retenue sont ensuite influencés à partir de celui-ci.

2. Dispositif selon la revendication 1, **caractérisé en ce que** le dispositif présente au moins un dispositif de réception (6) pour le deuxième champ magnétique alternant (5), lequel est isolé du premier champ magnétique alternant (3).

3. Dispositif selon la revendication 1, **caractérisé en ce que** le dispositif est configuré de telle sorte que le dispositif détermine, au moyen d'un déphasage entre le premier et le deuxième champ magnétique alternant (3, 5), une distance entre le véhicule et l'au moins un objet (4).

4. Dispositif selon la revendication 3, **caractérisé en ce que** le dispositif est configuré de telle sorte que le dispositif détermine, en fonction d'une variation dans le temps de la distance, une vitesse relative entre le véhicule et l'au moins un objet (4).

5. Dispositif selon l'une des revendications 1 à 4, **caractérisé en ce que** le dispositif est configuré de telle sorte que le dispositif classifie l'au moins un objet (4) en fonction d'une amplitude du deuxième champ magnétique alternant (5).

6. Dispositif selon la revendication 5, **caractérisé en ce que** le dispositif est configuré de telle sorte que le dispositif détermine une conductivité de l'au moins un objet (4) en fonction de l'amplitude et classifie l'objet (4) à l'aide de la conductivité.

7. Dispositif selon la revendication 2, **caractérisé en ce que** l'au moins un dispositif de réception (6) est isolé pour le premier champ magnétique alternant par un espacement de l'au moins un émetteur (2).

8. Dispositif selon la revendication 2, **caractérisé en ce qu'**il est prévu au moins un filtre pour isoler l'au moins un dispositif de réception (6) de l'au moins un émetteur (2).

9. Dispositif selon la revendication 8, **caractérisé en ce que** l'au moins un filtre est un filtre électronique.

10. Dispositif selon la revendication 8, **caractérisé en ce que** l'au moins un filtre est un filtre magnétique.
